# EUROPÄISCHE PATENTANMELDUNG

(11) **EP 3 786 510 A1**
(43) Veröffentlichungstag der Anmeldung: **03.03.2021**
(21) Anmeldenummer: 20190845.6
(22) Anmeldetag: 13.08.2020
(51) Int. Cl.: F17C 1/00, G01M 3/24, F17C 5/06

(54) **SCHALLEMISSIONSPRÜFUNGSDRUCKAUFBRINGVORRICHTUNG UND VERFAHREN ZUR DURCHFÜHRUNG EINER SCHALLEMISSIONSPRÜFUNG**

(30) Priorität: 27.08.2019 DE 102019212849
(71) Anmelder: TÜV SÜD Industrie Service GmbH, 80686 München (DE)
(72) Erfinder: KEMTER, Thomas, 98694 Ilmenau (DE); KRAUS, Daniel, 92660 Neustadt (DE)
(74) Vertreter: Grünecker Patent- und Rechtsanwälte PartG mbB

(57) **Zusammenfassung**

Eine Schallemissionsprüfungsdruckaufbringvorrichtung zum Durchführen einer Schallemissionsprüfung von einem Druckgerät, insbesondere Druckbehälter, weist eine verfahrbare Druckerzeugungsquelle mit einem Druckmediumvorrat und einen zwischen Druckgerät und Druckmediumvorrat angeordneten Druckpufferbehälter auf. Druckmedium ist unter einem ersten Druck aus dem Druckmediumvorrat dem Druckpufferbehälter und von dort über eine einzelne Ableitung dem Druckgerät ggf. unter einem zweiten Druck zuführbar. Durch die Schallemissionsprüfungsdruckaufbringvorrichtung und das entsprechende Verfahren zur Durchführung einer Schallemissionsprüfung vom einem Druckgerät werden Störgeräusche minimiert und eine zusätzliche Heizeinheit zum Verdampfen von Flüssiggas bzw. Druckmedium kann entfallen. Der gesamte Aufbau der Schallemissionsprüfungsdruckaufbringvorrichtung ist vereinfacht und es wird weniger Zeit benötigt. Außerdem entfallen zusätzliche Verbindungen zum Prüfobjekt zur Entnahme von Flüssiggas. Dadurch wird gleichzeitig die Arbeitssicherheit vor Ort erhöht, da das Risiko eines Flüssiggasaustritts erheblich minimiert wird.

## Beschreibung

Die Erfindung betrifft eine Schallemissionsprüfungsdruckaufbringvorrichtung zum Durchführen einer Schallemissionsprüfung und ein entsprechendes Verfahren zur Durchführung der Schallemissionsprüfung.

Eine entsprechende Schallemissionsprüfung ist beispielsweise in der EP 2 199 787 B1 beschrieben. Eine Schallemissionsprüfung ist ein im Wesentlichen zerstörungsfreies Prüfverfahren, bei dem plötzliche Veränderungen im Gefüge eines Werkstoffs eines Druckgerätes, die durch eine mechanische Belastung ausgelöst werden, zur Emission von Schall führen. Dadurch kann eine Deduktion und Lokalisation von Leckagen oder auch Fehlstellen wie Rissen oder Korrosion in dem Druckgerät erfolgen. Solche Druckgeräte werden im Rahmen der Betriebssicherheitsverordnung wiederkehrend geprüft, wobei bei Anwendung der Schallemissionsprüfung und Vorliegen eines durch eine anerkannte zugelassene Überwachungsstelle bestätigten Prüfkonzeptes die Innere Prüfung des Druckgerätes durch eine Schallemissionsprüfung ersetzt werden kann.

Aus dem Dokument DE 10 2005 039 202 A1 ist eine Wasserstoff-Tankstelle mit einem Speicher und einem Zwischenspeicher bekannt. Das Dokument US 6,745,801 B1 offenbart ein mobiles Wasserstofferzeugungs- und Versorgungssystem umfassend Abgabemittel zum Abladen von gasförmigem Wasserstoff.

Ebenfalls kann die hydrostatische Festigkeitsprüfung des Druckgerätes durch eine Gasdruckprüfung ersetzt werden, wenn diese aus Arbeitssicherheitsgründen mittels Schallemission in der Regel überwacht wird.

Ein entsprechendes Druckgerät ist beispielsweise ein Druckluftbehälter, Druckgeräte zur Speicherung von Gasen, weitere Druckgeräte wie Erdgas-, Flüssiggas- oder auch H₂-Druckgeräte, Druckgeräte in hydraulischen Anlagen, wie Blasen-, Kolbenspeicher oder Flaschen, sowie rotierende dampfbeheizte Zylinder, Druckgeräte mit Einbauten, Behälter wie Sinteröfen, Autoklaven, Härteöfen, Sterilisatoren in Krankenhäusern oder auch Durchleitungsdruckbehälter oder dergleichen.

Zur Schallemissionsprüfung werden in Abhängigkeit von der geplanten Ortungsart in vorberechneten Abständen Schallemissionssensoren am Druckgerät angebracht und dann durch Druckaufbau im Druckgerät die mechanische Belastung sowie die entsprechende Emission von Schall ausgelöst. Durch Auswertung der detektierten Schallsignale an den Schallemissionssensoren können bereits zu einem frühen Zeitpunkt eventuelle Schäden identifiziert werden, um dadurch beispielsweise größere Folgeschäden vorauszusagen. Außerdem erlaubt die Schallemissionsprüfung eine Lokalisierung einer Quelle eines entsprechenden Schallemissionssignals sowie auch eine Unterscheidung verschiedener Arten von Quellen.

Enthält der Druckbehälter beispielsweise Flüssiggas, ist also im Wesentlichen ein Druckgasbehälter, so kann der notwendige Prüfdruck für die Schallemissionsprüfung beispielsweise dadurch erzeugt werden, dass dem Prüfobjekt flüssiges Gas entnommen und mittels externer Energie verdampft wird. Dieses Gas wird dann dem Druckbehälter wieder zugeführt, um einen Prüfdruck zu erzeugen. Dabei kann es notwendig sein, dass zum Aufbau des notwendigen Prüfdrucks zusätzlich ein Kompressor eingesetzt werden muss.

Bei solchen bekannten Verfahren zur Drucksteigerung im Prüfobjekt treten störende Strömungsgeräusche und ggf. Vibrationen auf. Diese können die Nutzsignale bei der Behälterprüfung mittels Schallemission überlagern. Solche Störgeräusche können sich aufgrund der Strömungsverhältnisse und/oder aufgrund von Druckstößen und Vibrationen durch den Kompressor ergeben.

Ein weiterer Nachteil bei dem aus der Praxis bekannten Stand der Technik ist, dass zur Entnahme von Flüssiggas aus dem Prüfobjekt, zum Verdampfen und Wiederzuführen eine Reihe von zusätzlichen Einrichtungen notwendig sind und zusätzliche Anforderungen an die Arbeitssicherheit erfüllt werden müssen. Insbesondere beim An- oder Abkoppeln eines Entnahmeschlauchs für das flüssige Gas kann solches austreten und spontan verdampfen. Hierdurch wird eine Explosionszone gebildet. Außerdem benötigt der Aufbau der entsprechenden Prüfvorrichtung relativ viel Zeit und Arbeitskraft.

Der Erfindung liegt daher die Aufgabe zugrunde, eine Druckaufbringvorrichtung zur Durchführung einer Schallemissionsprüfung sowie ein entsprechendes Verfahren dahingehend zu verbessern, dass Störgeräusche minimiert werden, eine zusätzliche Heizeinheit zum Verdampfen von Flüssiggas entfällt, der gesamte Aufbau der Druckaufbringvorrichtung vereinfacht wird und weniger Zeit benötigt sowie beispielsweise keine zusätzlichen Verbindungen zum Prüfobjekt zur Entnahme von Flüssiggas notwendig sind. Dadurch wird zugleich die Arbeitssicherheit vor Ort erhöht, da das Risiko eines Flüssiggasaustritts erheblich minimiert wird.

Die Aufgabe wird durch eine Vorrichtung mit den Merkmalen des Anspruchs 1 gelöst.

Erfindungsgemäß erfolgt dabei die Verwendung einer verfahrbaren Druckerzeugungsquelle mit einem Druckmediumvorrat und einem zwischen Druckgerät und Druckmediumvorrat angeordneten Druckpufferbehälter. Das Druckmedium ist unter einem ersten Druck aus dem Druckmediumvorrat entnehmbar und wird über den Druckpufferbehälter über eine einzelne Ableitung dem Druckgerät ggf. unter einem zweiten Druck zugeführt.

Es ist also keine Entnahme von Druckmedium aus dem Druckgerät notwendig, da dieses aus dem Druckmediumvorrat der verfahrbaren Druckerzeugungsquelle entnommen wird. Das Druckmedium wird dann dem Druckpufferbehälter zugeführt und dort beispielsweise unter Druck zwischengespeichert, um es dann anschließend über die einzelne Ableitung dem Druckgerät zuzuführen. Erfindungsgemäß ist nur diese einzelne Ableitung notwendig, so dass nur eine einzige Leitung zwischen Druckgerät und Druckaufbringvorrichtung zu verlegen ist.

Durch die Verwendung des Druckpufferbehälters werden störende Strömungsgeräusche und/oder Druckstöße durch einen Kompressor erheblich reduziert. Die Schallemissionsprüfung kann daher ohne nennenswerte Störsignale, die Nutzsignale bei der Prüfung überlagern, durchgeführt werden. Ebenso ist keine zusätzliche Heizeinheit notwendig, um beispielsweise das aus dem Druckgerät entnommene Flüssiggas zu verdampfen. Damit entfällt ebenfalls eine komplexe Steuerung der Heizleistung einer solchen Heizeinheit, um beispielsweise ein Ansteigen einer Durchschnittstemperatur des flüssigen Gases im Druckgerät zu vermeiden. Ebenso entfällt die Notwendigkeit für eine Pumpe, um Flüssiggas aus dem Druckgerät für die Heizeinheit zu entnehmen. Dadurch wird ebenfalls die Arbeitssicherheit vor Ort erheblich erhöht, da das Risiko eines Flüssiggasaustritts im Wesentlichen nicht gegeben ist.

Bei einem einfachen Ausführungsbeispiel ist es denkbar, dass die Druckerzeugungsquelle ein Füllfahrzeug mit einem Druckmediumtank als Druckmediumvorrat ist. Solche Füllfahrzeuge werden standardmäßig hergestellt und verwenden als Druckmedium beispielsweise das gleiche Flüssiggas, welches im Druckgerät enthalten ist, oder zumindest entsprechende Flüssiggasderivate.

Um ggf. das dem Druckpufferbehälter zugeführte Druckmedium mit einem ausreichenden und erhöhten Druck des Druckmediums zu versorgen, kann die Druckerzeugungsquelle einen Kompressor zur Erzeugung des ersten Drucks aufweisen. Der Kompressor ist zwischen Druckmediumvorrat und Druckpufferbehälter angeordnet.

Durch die Verwendung des Druckpufferbehälters werden allerdings Vibrationen oder Druckstöße des Kompressors erheblich verringert oder gar vollständig unterdrückt. In der Regel erzeugt ein solcher Kompressor eine ungleichmäßige Strömung, die durch das Zuführen des Druckmediums zuerst zum Pufferbehälter nicht an das Druckgerät weitergegeben wird. Dies gilt ebenfalls für Druckstöße oder Vibrationen, die durch Verwendung des Druckpufferbehälters insbesondere während der Schallemissionsprüfung nicht auf das Druckgerät übertragen werden.

Bei der Verwendung des Füllfahrzeugs ist weiterhin zu beachten, dass für solche Füllfahrzeuge in der Regel notwendige Zulassungen auch für Explosionszonen vorliegen, so dass keine zusätzlichen Einrichtungen notwendig sind, da alle Einrichtungen des Füllfahrzeugs bereits die Anforderungen an Geräte innerhalb von Explosionszonen erfüllen.

Um ggf. in einfacher Weise und ohne zusätzliche Heizeinrichtung ausreichend Flüssiggas als Druckmedium im Druckmediumtank gasförmig zu bilden, kann der Druckmediumtank eine dunkle, insbesondere Sonnen- oder Lichteinstrahlung absorbierende Oberfläche aufweisen. Dadurch ist das Füllfahrzeug bereits auf im Wesentlichen natürliche Weise mit einem bestimmten Gasdruck im Druckmediumtank versorgt, der dann durch den Kompressor auf einen ggf. höheren erwünschten Druck angehoben wird.

Je nach Art und Größe des Prüfobjekts kann es sich als vorteilhaft erweisen, wenn auch der Druckpufferbehälter in seiner Größe, insbesondere in seinem Puffervolumen auswählbar ist.

Es besteht beispielsweise die Möglichkeit, dass der erste Druck unterschiedlich zum zweiten Druck ist, wobei bei einem einfachen Ausführungsbeispiel ebenfalls denkbar ist, dass erster und zweiter Druck im Wesentlichen gleich sind. Der Druck in der Zuleitung entspricht dann im Wesentlichen dem Druck in der Ableitung. Es besteht auch die Möglichkeit, dass diese Drücke unterschiedlich sind.

Um einen entsprechenden Prüfdruck im Druckgerät aufzubauen, ist es in der Regel günstig, wenn im Druckgerät mittels Zufuhr des Druckmediums aus dem Druckpufferbehälter ein vorgegebener Prüfdruck aufbaubar ist. Der Aufbau des Prüfdruckes wird durch eine Schallemissionsprüfung überwacht, um die Integrität des Prüfobjektes zu überprüfen.

Es besteht die Möglichkeit, nur mittels eines Anschlusses und beispielsweise eines entsprechenden Mehrwegeventils einerseits Druckmedium unter dem ersten Druck vom Kompressor dem Druckpufferbehälter und andererseits von dem Druckpufferbehälter unter dem zweiten Druck dem Druckgerät zuzuführen, ohne dass eine direkte Verbindung zwischen Kompressor bzw. Druckmediumvorrat und dem Druckgerät gebildet ist. Um auf ein solches Mehrwegeventil ggf. verzichten zu können, ist es weiterhin von Vorteil, wenn nur ein Anschluss am Druckpufferbehälter vorhanden ist, und beispielsweise eine einstellbare Drosseleinrichtung zumindest in der Ableitung und insbesondere benachbart zum Druckpufferbehälter angeordnet ist. Durch diese Drosseleinrichtung ist beispielsweise unterbunden, dass bei Zufuhr von Druckmedium vom Kompressor gleichzeitig Druckmedium vom Druckpufferbehälter zum Druckgerät gelangt. Durch die Drosseleinrichtung ist insbesondere auch eine Druckaufbringrate hinsichtlich des Druckgerätes einstellbar.

Weiterhin ist denkbar, dass sowohl in der Zuleitung als auch in der Ableitung jeweils zumindest eine Drosseleinrichtung, beispielsweise in Form eines Drosselventils, angeordnet ist. Dadurch besteht die Möglichkeit, sowohl vom Kompressor in Richtung Druckpufferbehälter als auch vom Druckpufferbehälter in Richtung Druckgerät entsprechend Druck mit gewünschter Druckaufbaurate aufzubauen. Hierbei ist weiterhin zu beachten, dass in diesem Zusammenhang beispielsweise die Zuleitung getrennt von der Ableitung am Druckpufferbehälter angeschlossen sein kann.

Die Schritte Zufuhr von Druckmedium vom Kompressor zum Druckpufferbehälter, und dann Zufuhr vom Druckpufferbehälter zum Druckgerät erfolgen beispielsweise kontinuierlich, um einen entsprechenden Prüfdruck im Inneren des Druckgerätes aufzubauen.

Um die gesamte Druckaufbringvorrichtung weitgehend mobil zu gestalten, kann es sich als günstig erweisen, wenn auch Kompressor und Druckpufferbehälter auf der Druckerzeugungsquelle bzw. dem Füllfahrzeug angeordnet oder anordbar sind. Auf diesem können ebenfalls Zuleitung und Ableitung zum Transport gelagert werden.

Um den Druckpufferbehälter einfach mit Zuleitung und Ableitung verbinden zu können, erweist es sich in der Regel als günstig, wenn der Druckpufferbehälter mittels eines T-Stücks mit Zuleitung und Ableitung verbunden ist. Denkbar ist auch die Verwendung eines Mehrwegeventils oder dergleichen.

Zum Druckabbau im Druckgerät bzw. zur Notentlastung des Druckgeräts kann es sich weiterhin als vorteilhaft erweisen, wenn eine Pumpeinrichtung über die Ableitung oder eine Druckgeräteleitung mit dem Druckgerät verbunden ist. Diese Pumpe kann dazu verwendet werden, Prüfdruck oder auch einen zu hohen Druck im Druckgerät durch Abpumpen beispielsweise einer Flüssigphase abzubauen. Dies kann über eine entsprechende Tankleitung erfolgen, mittels der die Pumpeinrichtung mit dem Druckmediumtank verbunden ist. Dabei ist es weiterhin als günstig anzusehen, wenn eine solche Flüssigphase mittels der Pumpeinrichtung dem Druckmediumvorrat bzw. Druckmediumtank des Füllfahrzeugs zugeführt wird. Auf diese Weise wird die Arbeitssicherheit weiter erhöht, da nicht nur der Prüfdruck im Druckgerät, sondern auch ein auftretender zu hoher Druck im Druckgerät sicher und ohne Leckage abgebaut werden kann.

In diesem Zusammenhang kann es weiterhin vorteilhaft sein, wenn insbesondere der Kompressor über eine Druckgeräteleitung mit dem Druckgerät so verbunden ist, dass auch eine Gasphase des im Druckgerät enthaltenen Flüssiggases direkt absaugbar ist, um beispielsweise den Druck im Druckgerät zu verringern. In diesem Zusammenhang ist es auch vorstellbar, dass ohne Nutzung der Pumpeinrichtung und durch eine direkte Verbindung zwischen Druckgerät und Druckmediumtank beispielsweise durch Aufbau eines entsprechenden Drucks im Druckgerät mittels Kompressor und Druckpufferbehälter die Flüssigphase des Flüssiggases dem Druckmediumtank zugeführt wird.

Ein entsprechendes Verfahren zur Durchführung einer Schallemissionsprüfung eines Druckgeräts, insbesondere Druckbehälters, zeichnet sich durch folgende Schritte aus. Zuerst erfolgt in der Regel ein Aufbau einer Schallemissionsprüfvorrichtung, d. h. zumindest Anbringen von Schallemissionssensoren am Druckgerät als Prüfobjekt und verbinden der Schallemissionssensoren mit einer Auswerteeinheit. Die Schallemissionssensoren können vorteilhafterweise außen am Prüfobjekt angebracht werden. Die Verbindung zwischen Schallemissionssensoren und Auswerteeinheit kann verkabelt oder auch kabellos erfolgen.

Sobald die Schallemissionsprüfvorrichtung aufgebaut ist, erfolgt ein Anschließen der Schallemissionsprüfungsdruckaufbringvorrichtung nach der vorangehenden Beschreibung. Insbesondere wird die Ableitung an dem Prüfobjekt als einzige Leitung angeschlossen. Danach erfolgt ein Aufbau eines Prüfdrucks mittels des über die Ableitung verbundenen Druckpufferbehälters bei gleichzeitiger Überwachung des Prüfobjekts mittels der Schallemissionsprüfvorrichtung.

Der Prüfdruck wird dann zur weiteren Durchführung der Schallemissionsprüfung aufrechterhalten und nach Abschluss der Prüfung erfolgt ein Abbau des Prüfdrucks durch vorzugsweise Rekondensation der Gasphase sowie ein Abbau der Schallemissionsprüfvorrichtung.

Um einen entsprechenden Aufbau des Prüfdrucks über den Druckpufferbehälter zu ermöglichen, kann vorher vom Druckmittelvorrat Druckmedium unter dem ersten Druck über den Kompressor dem Druckpufferbehälter zugeführt werden. Anschließend kann das Zuführen von im Druckpufferbehälter enthaltenem Druckmedium zum Druckgerät über die angeschlossene Ableitung erfolgen.

Ein direkter Kontakt zwischen Kompressor und Druckgerät wird vorteilhafterweise dadurch unterbunden, dass ein Druckpufferbehälter zwischengeschaltet ist. Die Drosseleinrichtung zwischen Druckpufferbehälter und Druckgerät regelt die Drucksteigerungsrate während der Schallemissionsprüfung.

Um bereits ohne den Kompressor einen bestimmten Druck im Druckmediumvorrat aufzubauen, erweist es sich in der Regel als günstig, wenn ein Verdampfen von Druckmedium und/oder Druckaufbau im Druckmediumvorrat mittels von einer dunklen Oberfläche oder Sonnenlichteinstrahlung absorbierender Oberfläche des Druckmitteltanks absorbierter Sonnen- oder Lichteinstrahlung erfolgt.

Es wurde bereits darauf hingewiesen, dass erfindungsgemäß Kompressor und Druckpufferbehälter auf dem Füllfahrzeug als verfahrbarer Druckerzeugungsquelle mitgeführt werden können. Dies gilt analog auch für Zuleitung und Ableitung sowie die Drosseleinrichtung.

Im Folgenden wird ein vorteilhaftes Ausführungsbeispiel der Erfindung anhand der beigefügten Zeichnung näher erläutert. Dabei zeigt:

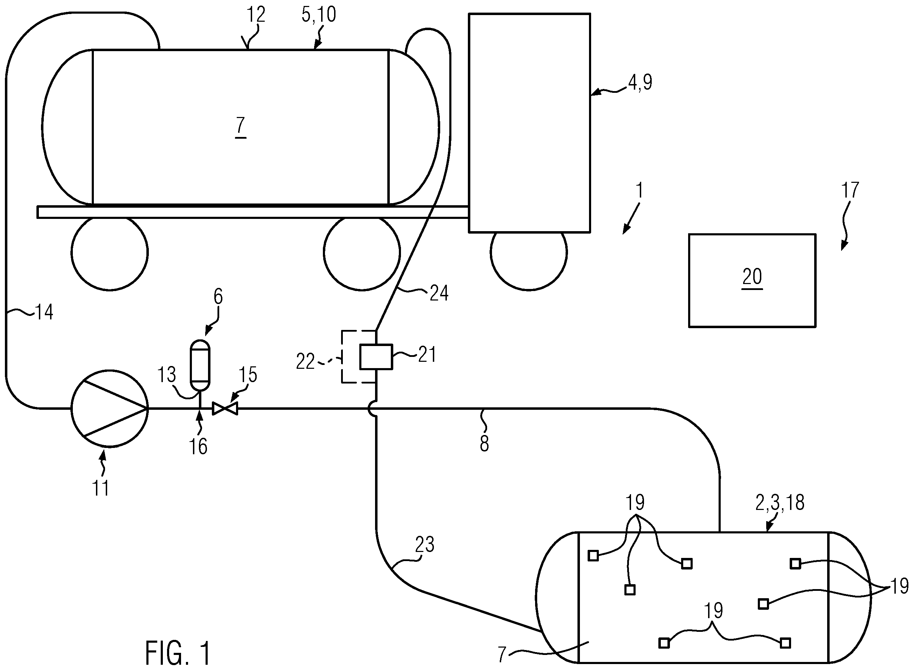

- Fig. 1: eine Prinzipskizze einer erfindungsgemäßen Druckaufbringvorrichtung zur Durchführung einer Schallemissionsprüfung.

Fig. 1 zeigt eine Prinzipskizze einer erfindungsgemäßen Druckaufbringvorrichtung 1. Diese ist im Wesentlichen als selbstfahrendes Füllfahrzeug 9 ausgebildet, welches von diversen Herstellern standardmäßig hergestellt wird. Ein solches Füllfahrzeug weist einen Druckmediumtank 10 für Flüssiggas als Druckmediumvorrat 5 auf. Das in dem Druckmediumtank 10 enthaltene Flüssiggas 7 kann identisch zu dem Flüssiggas 7 im Druckgerät 2 sein. Allerdings sind auch Derivate des Flüssiggases 7 des Druckgerätes 2 als Druckmedium im Druckmediumtank 10 möglich.

Auf einer Oberfläche 12 ist der Druckmediumtank 10 dunkel oder mit einer Sonnenlicht absorbierenden Oberfläche ausgebildet, um Sonnen- oder Lichteinstrahlung zum Aufwärmen des Druckmediums zu verwenden. Dadurch ergibt sich ein entsprechender Gasdruck im Inneren des Druckmediumtanks 10, der höher als beispielsweise bei weiß oder hell lackierten Füllfahrzeugen 9 ist.

Das Füllfahrzeug 9 ist Teil einer Druckaufbringvorrichtung 1, die weiterhin eine Zuleitung 14, einen Kompressor 11, einen Druckpufferbehälter 6, eine Drosseleinrichtung 15 und eine Ableitung 8 aufweist. Diese sind alle auf dem Füllfahrzeug 9 anordbar und ggf. nur zur Durchführung der Schallemissionsprüfung abladbar. Allerdings besteht ebenfalls die Möglichkeit, dass bis auf ggf. die Ableitung 8 alle weiteren Teile der Druckaufbringvorrichtung 1 auch während der Schallemissionsprüfung auf dem Füllfahrzeug 9 verbleiben.

Die Zuleitung 14 verbindet den Druckmediumtank 10 mit dem Kompressor 11. Der Kompressor dient insbesondere dazu, einen bereits im Druckmediumtank 10 aufgebauten Druck des gasförmigen Druckmediums zu erhöhen und an den Druckpufferbehälter 6 weiterzuleiten. Durch die Verwendung des Kompressors treten in der Regel Vibrationen oder Druckstöße auf, die durch die Verwendung des Druckpufferbehälters 6 weitestgehend verringert und nicht an das Druckgerät 2 weitergeleitet werden. Dies betrifft ebenfalls eine ggf. ungleichmäßige Strömung durch den Kompressor 11.

Bei dem Füllfahrzeug 9 ist zu beachten, dass solche Füllfahrzeuge in der Regel bereits entsprechende Zulassungen für Explosionszonen aufweisen und ggf. auch standardmäßig mit einem Kompressor und weiteren notwendigen Einrichtungen ausgestattet sind. Es erfolgt dann insbesondere noch die Anordnung des Druckpufferbehälters 6 zwischen dem Kompressor 11 und dem Druckgerät 2, um entsprechende Vibrationen, Druckstöße, Strömungsungleichmäßigkeiten und dergleichen zu unterbinden.

Die Größe des Druckpufferbehälters 6 kann entsprechend dem gewünschten Behältervolumen ausgewählt werden. In der Regel besteht keine Abhängigkeit zwischen Größe des zu prüfenden Druckgerätes und der Größe oder dem Behältervolumen des Druckpufferbehälters 6.

Der Druckpufferbehälter 6 ist beispielsweise mittels eines T-Stücks 16 sowohl mit der Zuleitung 14 als auch der Ableitung 8 verbunden. Dadurch besteht die Möglichkeit, dass der Druckpufferbehälter 6 nur einen Anschluss aufweist. Ebenfalls möglich ist bei einem weiteren Ausführungsbeispiel, dass der Druckpufferbehälter 6 zwei Anschlüsse aufweist, von denen einer zum Anschluss der Zuleitung 14 und einer zum Anschluss der Ableitung 8 verwendet wird. Allerdings ist nur ein Anschluss 13 am Druckpufferbehälter 6 vorgesehen, falls ein T-Stück 16 verwendet wird.

Benachbart zum Druckpufferbehälter 6 ist in der Ableitung 8 eine Drosseleinrichtung 15 angeordnet, mittels der eine Druckaufbringungsrate einstellbar ist, durch die eine entsprechende Zufuhr von unter Druck stehendem Druckmedium zum Druckgerät 2 erfolgt. Eine solche Drosselung erfolgt möglichst weit entfernt vom Prüfobjekt 18, um mögliche Störsignale bei einer Drosselung am Prüfobjekt zu vermeiden.

Die Ableitung 8 erstreckt sich vom Druckpufferbehälter 6 bzw. von der Drosseleinrichtung 15 bis zu einem entsprechenden Anschluss am Druckgerät 2, welches beispielsweise ein Druckbehälter und insbesondere Druckgasbehälter 3 ist und ein Prüfobjekt 18 für die Schallemissionsprüfung bildet.

Zur Schallemissionsprüfung wird eine Schallemissionsprüfvorrichtung 17 verwendet, die zumindest eine Anzahl von Schallemissionssensoren 19 und eine Auswerteeinheit 20 aufweist. Die Schallemissionssensoren 19 sind beispielsweise auf einer Außenseite des Druckbehälters 3 anbringbar und übermitteln Schallsignale an die Auswerteeinheit 20. Dies kann kabelgebunden oder auch kabellos erfolgen.

Bei dem Ausführungsbeispiel nach Fig. 1 ist insbesondere eine Drosseleinrichtung 15 angeordnet. Es ist ebenfalls möglich, dass nicht nur in der Ableitung 8, sondern auch in der Zuleitung 14 zumindest eine solche Drosseleinrichtung 15, beispielsweise in Form eines Drosselventils, angeordnet ist. Dies gilt insbesondere dann, wenn der Druckpufferbehälter 6 nicht nur einen Anschluss 13 aufweist, sondern über einen Anschluss mit der Zuleitung 14 und über einen weiteren Anschluss mit der Ableitung 8 verbunden ist.

Zum Druckabbau im Druckgerät 2 besteht die Möglichkeit, dass dies nach Beendigung eines entsprechenden Druckaufbaus mittels Kompressors und Druckpufferbehälter und Rekondensation der Gasphase im Druckgerät 2 erfolgt. Um ggf. aktiv den Prüfdruck oder einen Überdruck im Druckgerät 2 abbauen zu können, kann zusätzlich eine Pumpeinrichtung 21 oder über einen Bypass 22 das Druckgerät 2 direkt über eine Druckgeräteleitung 23 und 24 mit dem Druckmediumtank 10 verbunden sein. Durch Umstellen des Kompressors 11 auf Saugbetrieb kann aus den Druckgerät 2 über die Ableitung 8 Gasphase aus dem Druckgerät 2 entnommen und damit ein Prüfdruck oder Überdruck im Druckgerät 2 abgebaut werden. Dies erfolgt im Wesentlichen durch Absaugen der Gasphase.

Um ggf. einen Überdruck schneller oder auch ein Entleeren des Druckgeräts 2 hinsichtlich des Flüssiggases 7 in einfacher Weise zu ermöglichen, kann über die Druckgeräteleitung 23 die Flüssigphase dem Druckmediumtank 10 direkt zugeführt werden. Dies kann einerseits durch einen entsprechenden Druck im Druckgerät 2 erfolgen, der im Wesentlichen das Flüssiggas entlang der Druckgeräteleitung 23 dem Druckmediumtank 10 zuführt, wobei dies allerdings auch durch aktives Pumpen mittels der Pumpeinrichtung 21 erfolgen kann, die mit dem Druckgerät 2 über die Druckgerätleitung 23 und mit dem Druckmediumtank 10 über eine Tankleitung 24 verbunden ist. Erfolgt ein Ausdrücken der Flüssigphase aus dem Druckgerät 2 durch Aufbau eines Überdrucks im Druckgerät 2 mittels Kompressor 11 und Druckpufferbehälter 6, so können Druckgerätleitung 23 und Tankleitung 24 als eine Leitung ausgebildet sein, ohne Anordnung einer Pumpeinrichtung 21 in dieser Leitung.

Die Anordnung dieser zusätzlichen Leitungen zwischen Druckgerät 2 und Druckmediumtank 10, ggf. unter Zuhilfenahme der Pumpeinrichtung 21, erhöhen die Arbeitssicherheit, da in schneller und einfacher Weise ein Abbau eines Überdrucks im Druckgerät 2, des Prüfdrucks oder auch ein Entleeren des Druckgeräts 2 erfolgen kann.

Erfindungsgemäß ergibt sich insbesondere durch die Anordnung des Druckpufferbehälters 6 eine erhebliche Verringerung von Vibration oder Druckstößen von Seiten des Kompressors her sowie auch eine Verringerung einer ungleichmäßigen Strömung in Richtung des Druckbehälters 3. Es wird nur ein Anschluss am Druckbehälter benötigt und durch den einfachen Aufbau der Druckaufbringvorrichtung und deren Transport insgesamt durch das Füllfahrzeug 9 sind Auf- und Abbauzeiten vor Ort sehr kurz. Eine zusätzliche Heizeinheit zum Verdampfen von beispielsweise Flüssiggas aus dem Druckgasbehälter 3 nach vorheriger Entnahme und eine zusätzliche Leitung zur anschließenden Rückführung in den Druckgasbehälter sind nicht notwendig. Ebenso entfällt die Notwendigkeit für eine Pumpe, um solches Flüssiggas aus dem Druckgasbehälter einer solchen Heizeinheit zuzuführen, wozu in der Regel ein separater Anschluss am Druckgasbehälter notwendig ist. Die Arbeitssicherheit vor Ort ist erheblich erhöht, da ein Risiko eines Flüssiggasaustritts bei Abpumpen von Flüssiggas erheblich minimiert wird.

## Patentansprüche

1. Schallemissionsprüfungsdruckaufbringvorrichtung (1) zur Durchführung einer Schallemissionsprüfung von einem Druckgerät (2), insbesondere Druckbehälter (3), welche eine verfahrbare Druckerzeugungsquelle (4) mit einem Druckmediumvorrat (5) und einen zwischen Druckgerät (2) und Druckmediumvorrat (5) angeordneten Druckpufferbehälter (6) aufweist, wobei das Druckmedium (7) unter einem ersten Druck aus dem Druckmediumvorrat (5) dem Druckpufferbehälter (6) und von dort über eine einzelne Ableitung (8) dem Druckgerät (2) ggf. unter einem zweiten Druck zuführbar ist.

2. Schallemissionsprüfungsdruckaufbringvorrichtung nach Anspruch 1, **dadurch gekennzeichnet, dass** die Druckerzeugungsquelle (4) ein Füllfahrzeug (9) mit einem Druckmediumtank (10) als Druckmediumvorrat (5) ist.

3. Schallemissionsprüfungsdruckaufbringvorrichtung nach Anspruch 1 oder 2, **dadurch gekennzeichnet, dass** die Druckerzeugungsquelle (4) einen Kompressor (11) zur Erzeugung des ersten Drucks aufweist, der insbesondere zwischen Druckmediumvorrat (5) und Druckpufferbehälter (6) angeordnet ist,wobei vorzugsweise der Kompressor (11) und Druckpufferbehälter (6) auf der Druckerzeugungsquelle (4) bzw. dem Füllfahrzeug (9) angeordnet bzw. anordbar sind.

4. Schallemissionsprüfungsdruckaufbringvorrichtung nach einem der vorangehenden Ansprüche, **dadurch gekennzeichnet, dass** der Druckmediumtank (10) eine dunkle, insbesondere Sonnen- und Lichteinstrahlung absorbierende Oberfläche (12) aufweist, und/oder
der Druckbehälter (3) ein Druckgasbehälter für Flüssiggas ist und das Druckmedium (7) Flüssiggas oder ein Flüssiggasderivat ist.

5. Schallemissionsprüfungsdruckaufbringvorrichtung nach einem der vorangehenden Ansprüche, **dadurch gekennzeichnet, dass** der Druckpufferbehälter (6) hinsichtlich seiner Größe und insbesondere seines Puffervolumens auswählbar ist.

6. Schallemissionsprüfungsdruckaufbringvorrichtung nach einem der vorangehenden Ansprüche, **dadurch gekennzeichnet, dass** erster und zweiter Druck im Wesentlichen gleich sind, oder
erster und zweiter Druck unterschiedlich sind.

7. Schallemissionsprüfungsdruckaufbringvorrichtung nach einem der vorangehenden Ansprüche, **dadurch gekennzeichnet, dass** im Druckgerät (2) mittels Zufuhr des Druckmediums (7) aus dem Druckpufferbehälter (6) ein vorgegebener Prüfdruck aufbaubar ist.

8. Schallemissionsprüfungsdruckaufbringvorrichtung nach einem der vorangehenden Ansprüche, **dadurch gekennzeichnet, dass** der Druckpufferbehälter (6) einen Anschluss (13) für eine Zuleitung (14) vom Kompressor (11) und einen Anschluss für die Ableitung (8) zum Druckgerät (2) aufweist, wobei der Druckpufferbehälter (6) insbesondere mittels eines T-Stücks (16) mit Zuleitung (14) und Ableitung (8) verbunden ist.

9. Schallemissionsprüfungsdruckaufbringvorrichtung nach einem der vorangehenden Ansprüche, **dadurch gekennzeichnet, dass** eine insbesondere einstellbare Drosseleinrichtung (15) zumindest in der Ableitung (8) und insbesondere benachbart zum Druckpufferbehälter (6) angeordnet ist, oder
in der Zuleitung (14) und der Ableitung (8) zumindest jeweils eine Drosseleinrichtung, insbesondere ein Drosselventil, angeordnet ist.

10. Schallemissionsprüfungsdruckaufbringvorrichtung nach einem der vorangehenden Ansprüche, **dadurch gekennzeichnet, dass** eine Pumpeinrichtung (21) über die Ableitung (8) und/oder einer Druckgeräteleitung (23) mit dem Druckgerät (2) verbunden ist, und/oder
das Druckgerät (2) mit dem Druckmediumvorrat (5) über eine separate Leitung (23, 24), einen Bypass (22) und/oder eine diesem zugeordnete Pumpeinrichtung (21) verbunden ist.

11. Verfahren zur Durchführung einer Schallemissionsprüfung eines Druckgeräts (2), insbesondere Druckbehälters (3), mit den folgenden Schritten:
i) Aufbau einer Schallemissionsprüfvorrichtung (17) aus zumindest einer Anzahl von Schallemissionssensoren (19) am Druckgerät (2) als Prüfobjekt (18) und einer mit den Schallemissionssensoren (19) verbundenen Auswerteeinheit (20);
ii) Anschließen der Schallemissionsprüfungsdruckaufbringvorrichtung (1) nach einem der vorangehenden Ansprüche und insbesondere der Ableitung (8) an dem Prüfobjekt (18);
iii) Aufbau eines Prüfdrucks im Prüfobjekt mittels des über die Ableitung (8) verbundenen Druckpufferbehälters (6) bei gleichzeitiger Überwachung des Prüfobjekts mittels der Schallemissionsprüfvorrichtung (17);
iv) Aufrechterhalten des Prüfdrucks zur weiteren Durchführung der Schallemissionsprüfung; und
v) Abbau des Prüfdrucks und Lösen der Ableitung (8) von dem Druckgerät (2) sowie der Schallemissionsprüfvorrichtung (17).

12. Verfahren nach Anspruch 12, **gekennzeichnet durch** Zuführen, insbesondere nach Schritt ii), von im Druckmediumvorrat (5) verdampftem Druckmedium (7) über den Kompressor (11) unter dem ersten Druck zum Druckpufferbehälter (6) und Zuführen von im Druckpufferbehälter (6) enthaltenem Druckmedium (7) unter einem zweiten Druck zum Druckgerät (2).

13. Verfahren nach Anspruch 12 oder 13, **gekennzeichnet durch** Schließen einer Drosseleinrichtung (15) zwischen Druckpufferbehälter (6) und Druckgerät (2) zumindest während einer ersten Phase des Druckaufbaus im Druckpufferbehälter (6), und/oder
Öffnen der Drosseleinrichtung (15) zum Druckaufbringen im Druckgerät (2) bis zum Erreichen des Prüfdrucks.

14. Verfahren nach einem der Ansprüche 12 bis 14, **gekennzeichnet durch** Verdampfen von Druckmedium (7) und/oder Druckaufbau im Druckmediumvorrat (5) mittels von einer dunklen Oberfläche, insbesondere Sonnen- und Lichteinstrahlung absorbierende Oberfläche (12) des Druckmitteltanks (10) als Druckmittelvorrat (5) absorbierter Sonnen- oder Lichteinstrahlung,und/oder
Mitführen von Kompressor (11) und Druckpufferbehälter (6) auf einem Füllfahrzeug (9) als verfahrbarer Druckerzeugungsquelle (4).

15. Verfahren nach einem der Ansprüche 12 bis 16, **dadurch gekennzeichnet, dass** zum Druckabbau oder zur Notentlastung im Druckgerät (2) Gasphase oder Flüssigphase aus dem Druckgerät (2) über den Kompressor (11), eine Druckgeräteleitung (23, 24) mit zugeordneter Pumpe (21) und/oder Bypass (22) dem Druckmediumtank zugeführt wird.
